# EUROPEAN PATENT APPLICATION

(11) **EP 4 797 743 A1**
(43) Date of publication of application: **26.08.2026**
(21) Application number: 25398005.6
(22) Date of filing: 19.02.2025
(51) Int. Cl.: H04W 8/12, H04W 88/16, H04W 88/18, H04W 92/02, H04W 8/18

(54) **5G SESSION OPTIMISER**

(71) Applicant: Vodafone Group Services Limited, Newbury, Berkshire RG14 2FN (GB)
(72) Inventor: Nunes, André, London, W2 6BY (GB); Lima, Bruno, London, W2 6BY (GB)
(74) Representative: Boult Wade Tennant LLP

(57) **Abstract**

There is provided a method for a session optimiser in an IP exchange (IPX) domain, the method comprising: receiving, at the session optimiser, information relating to signalling and subscriber user plane payloads for a roaming subscriber; storing, at the session optimiser, the received information relating to signalling and subscriber user plane payloads; determining, at the session optimiser, a subscriber profile for the subscriber based on the stored information relating to signalling and subscriber user plane payloads; and performing, by the session optimiser, one or more actions based on the determined subscriber profile.

## Description

### FIELD OF THE INVENTION

The present disclosure relates to a platform operating in the IPX domain to provide features to mobile network operators for roaming scenarios.

### BACKGROUND

The use of the Public Land Mobile Network (PLMN), and in particular a Visited PLMN (V-PLMN) in roaming scenarios can limit the features that a mobile network operator (MNO) is able to implement to a subscriber. The present disclosure addresses this and other problems.

### SUMMARY OF THE INVENTION

In accordance with aspects of the present disclosure, there is provided a method for a session optimiser in an IP exchange (IPX) domain, the method comprising: receiving, at the session optimiser, information relating to signalling and subscriber user plane payloads for a roaming subscriber; storing, at the session optimiser, the received information relating to signalling and subscriber user plane payloads; determining, at the session optimiser, a subscriber profile for the subscriber based on the stored information relating to signalling and subscriber user plane payloads; and performing, by the session optimiser, one or more actions based on the determined subscriber profile.

In accordance with further aspects of the present disclosure, there is provided a system for an IP exchange (IPX) domain, comprising: a Security Edge Protection Policy (SEPP); a Policy Control Function (PCF); a Session Management Function (SMF); a User Plane Function (UPF); and a session optimiser, wherein the session optimiser is operable to carry out the method of any of the various examples and embodiments described herein.

### BRIEF DESCRIPTION OF THE DRAWINGS

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
Figure 1 shows a block diagram of a session optimiser and associated functions in an IP exchange (IPX) domain, in accordance with aspects of the present disclosure;
Figure 2 shows a block diagram of communications between an IPX domain, a H-PLMN and a V-PLMN, in accordance with aspects of the present disclosure;
Figure 3 shows a further block diagram of communications between an IPX domain, a H-PLMN and a V-PLMN, in accordance with further aspects of the present disclosure;
Figure 4 shows a further block diagram of communications between an IPX domain 100, a V-PLMN 300, and a third-party domain 400, in accordance with aspects of the present disclosure.

### DETAILED DESCRIPTION

In the following description, for purposes of explanation, numerous specific details of certain examples are set forth. Reference in the specification to "an example" or similar language means that a particular feature, structure, or characteristic described in connection with the example is included in at least that example, but not necessarily in other examples.

Examples may provide a session optimiser, also referred to as a session optimiser module, that operates in the IP Exchange (IPX) domain. This means that the session optimiser operates outside of the PLMN domain, and thus can offer features and services to a mobile network operator (MNO) for roaming scenarios. In examples, the session optimiser may be capable of operating independently from the H-PLMN domain. The session optimiser does not interfere with selection of the foreign network, and thus does not affect the operation of the V-PLMN.

The session optimiser is operable to receive, for a roaming subscriber, information relating to signalling and information relating to subscriber user plane payloads. The session optimiser is further operable to store said received information (i.e. the information relating to signalling and the information relating to subscriber user plane payloads). The stored information may comprise one or more sets of historic information relating to signalling and/or one or more sets of historic information relating to user plane payloads. The stored information may comprise one or more sets of live or real-time information relating to signalling and/or one or more sets of live or real-time information relating to user plane payloads.

The session optimiser is further operable to determine a subscriber profile for a subscriber based on the stored information. The subscriber profile may comprise information relating to subscriber activity. In examples, the subscriber activity may comprise one or more of a SUPI, a V-PLMN, a H-PLMN, a DNN, a session date, a session time, a session duration, an amount of consumed data, a type of traffic or similar. In some examples, the subscriber activity may comprise one or more parameters exchanged via a HTTP/2 bus to which the session optimiser is connected.

The session optimiser is further operable to perform one or more actions based on the determined subscriber profile. In examples, the one or more actions may comprise allocating one or more Session Management Functions (SMFs) to subscriber traffic. In examples, the one or more actions may comprise allocating one or more User Plane Functions (UPFs) to subscriber traffic. In some examples, the one or more actions may comprise allocating both one or more SMFs and one or more UPFs to subscriber traffic.

In examples, the one or more actions may comprise determining a quality of service profile for a subscriber based on an associated subscriber profile for said subscriber. The subscriber profile may comprise an indication of one or more types of traffic. The subscriber profile may indicate an expected or predicted traffic use or traffic pattern for the subscriber associated with the one or more types of traffic. The subscriber profile may indicate a historic traffic pattern for the subscriber associated with the one or more types of traffic. The one or more types of traffic may comprise one or more of internet of things (IoT) traffic, low latency traffic, video streaming traffic, and similar. The one or more types of traffic may be associated with one or more associated quality of service parameters. The quality of service profile may be chosen based on an expected type of traffic associated with the subscriber. The quality of service profile may define one or more parameters and/or characteristics for determining how one or more session PDUs are to be treated in a network. The quality of service profile may comprise one or more parameters as described in 3GPP TS 23.501, §5.7.1.2. The one or more actions may further comprise allocating one or more SMFs and/or UPFs to the subscriber traffic based on the determined quality of service profile. The one or more SMFs and/or UPFs may be allocated based on a quality of service achieved by the SMF and/or UPF. The one or more actions may further comprise performing an implementation of quality of service to the subscriber traffic. Performing an implementation of quality of service to the subscriber traffic may comprise configuring, by the session optimiser, one or more policies on a PCF to implement one or more quality of service profiles in response to one or more conditions being satisfied. In some examples, the PCF may be responsible for implementing one or more policies and/or policy and charging control (PCC) rules, including one or more quality of service profiles, on a PDU session. By way of example, if a subscriber is performing one or more internet of things (IoT) actions, then the optimiser may implement a quality of service profile tailored for IoT. This may be achieved by the session optimiser configuring one or more policies on the PCF, when then implements PCC rules on the SMF, which consequently affects the subscriber PDU session.

In examples, the one or more actions may comprise determining a subscriber tariff for the subscriber. The subscriber tariff may be determined based on the subscriber profile. The subscriber tariff may be determined based on a historic and/or predicted traffic pattern of the subscriber. In examples, the subscriber tariff may be determined based on a type of traffic most commonly originating from the subscriber. For example, if it is determined that a subscriber typically consumes a certain amount of streaming data when roaming in a certain V-PLMN, then the subscriber tariff may be a tailored data plan that better fits the subscriber's consumption. In examples, information relating to one or more subscriber tariffs offered to a subscriber may be stored in a memory. The information relating to one or more subscriber offered to a subscriber may comprise whether or not the tariff was successfully accepted by the subscriber.

In examples, the one or more actions comprises determining a policy related to performing Deep Packet Inspection (DPI).

In some examples, the session optimiser may be operable to receive one or more subscriber policies associated with one or more subscribers or groups of subscribers. In some examples, the session optimiser may be operable to receive one or more price plans, and/or one or more triggers to activate one or more of the one or more price plans. In some examples, the session optimiser may be operable to receive information related to subscriber activity. The information relating to subscriber activity may comprise one or more of a SUPI, a V-PLMN, a H-PLMN, a DNN, a session date, a session time, a session duration, an amount of consumed data, a type of traffic or similar. In some examples, the subscriber activity may comprise one or more parameters exchanged via a HTTP/2 bus to which the session optimiser is connected. In some examples, the session optimiser may be operable to receive information related to one or more 5G core elements of the network. The information related to the one or more 5G core elements may comprise a SMF location and/or a UPF location. The information related to the one or more 5G core elements may comprise a latency associated with a SMF and/or a latency associated with a UPF. The information related to the one or more 5G core elements may comprise a type of traffic for which a SMF is able to serve and/or a type of traffic for which a UPF is able to serve. The information related to the one or more 5G core elements may comprise one or more of a node reachability status, a node ID, and a list of allowed locations. The list of allowed locations may comprise one or more H-PLMNs and/or V-PLMS that a node is able or permitted to serve.

In examples, the session optimiser may be further operable to validate one or more of: the one or more subscriber policies, the one or more price plans, the information relating to subscriber activity, and the information relating to the one of more 5G core elements. In examples, the session optimiser may be further operable to validate information relating to signalling and information relating to subscriber user plane payloads. Validating may comprise determining whether data provided by an input interface of the session optimiser is valid and meets criteria defined for populating a database. Validating may comprise determining if one or more queries performed on a database are permitted. Determining if one or more queries performed on a database are permitted may comprise checking a source of the query and checking a user making the query.

In examples, receiving information may be carried out by one or more inputs to the session optimiser. The one or more inputs to the session optimiser may comprise one or more of a network API input, a HTTP/2 proxy input, and a user interface. In examples, the one or more actions may be carried out by one or more outputs to the session optimiser. The one or more outputs to the session optimiser may comprise one or more of a network API output and a HTTP/2 proxy output.

In examples, the session optimiser may be implemented in the IPX domain. Additionally, each of the SEPP, PCF, SMF and UPF may be implemented in the IPX domain. With each of these network elements in the IPX domain, it can be ensured that the session optimiser has access to relevant data for correlating subscriber signalling and user plane information. In examples, the session optimiser is communicatively coupled to the same HTTP/2 BUS as the SEPP, the SMF and the PCF. The UPF may comprise a Deep Packet Inspection (DPI) feature. In some examples, the session optimiser, at least one UPF, and at least one SMF may be implemented in the IPX domain, in order that subscriber user plane payload can be correlated with subscriber traffic signalling. In some examples, the session optimiser may be operable to redirect a subscriber PDU to either a UPF located inside of the IPX domain, or a UPF located outside of the IPX domain. In examples, the SMF is communicatively connected to the session optimiser, with both the SMF and the session optimiser in the IPX domain.

The session optimiser may comprise one or more of: one or more input interfaces, one or more data validation modules, one or more databases, one or more decision modules, and one or more output interfaces. The one or more input interfaces may comprise a network API input. The network API input may be operable to receive data from other platforms, which may be used to populate one or more databases of the session optimiser. The network API input may be operable to query one or more databases of the session optimiser to access information. The one or more input interfaces may comprise a HTTP/2 proxy input. The HTTP/2 proxy input may be operable to sniff HTTP/2 data and populate a subscriber database of the session optimiser with said data. The one or more input interfaces may comprise a user interface. The user interface may be operable to allow a user to consult and/or populate one or more databases of the session optimiser.

The validation modules may comprise a data validator. The data validator may be operable to validate information queried from or provided to one or more databases of the session optimiser. The data validator may be operable to ensure that data provided by one or more of the input interfaces is valid and meets one or more criteria for populating the one or more databases. The data validator may be operable to verify if queries performed on the one or more databases are permitted. Verifying if queries performed on the one or more databases are permitted may comprise checking a source of the query and/or a user making the query.

The one or more databases may comprise a policies database. The policies database may define policies attributed to a subscriber and/or a range of subscribers. In some examples, policies may be defined that determine a UPF that should serve a subscriber based on factors, said factors comprising subscriber location, type of traffic, and similar. In some examples, policies may be defined relating to throttling and/or DPI. The one or more databases may comprise a price plan database. The price plan database may comprise price plans available for subscribers. The price plan database may comprise triggers operable to activate a specified price plan. The one or more databases may comprise a subscriber activity database. The subscriber activity database may store information related to subscriber activity. The information related to the subscriber activity may comprise one or more of a SUPI, a V-PLMN, a H-PLMN, a DNN, a session date, a session time, a session duration, an amount of consumed data, a type of traffic or similar. In some examples, the subscriber activity may comprise one or more parameters exchanged via a HTTP/2 bus to which the session optimiser is connected. The one or more databases may comprise a network database. The network database may comprise information related to one or more 5G core network elements. The information related to one or more 5G core network elements may comprise one or more of a SMF location, a UPF location, a SMF latency, a UPF latency, a type of traffic for which a SMF can serve, a type of traffic for which a UPF can serve.

The one or more decision modules may comprise an artificial intelligence (AI) module or a machine learning (ML) module. The one or more decision modules may be operable to implement logic defined in one or more of the policy database and the price plan database. The one or more decision modules may be operable to correlate information from one or more of the policy database and the price plan database with information in one or more of the subscriber activity database and the network database. The one or more decision modules may be operable to, based on decisions, trigger actions in an output interface, as specified in one or more of the policy database and the price plan database. The one or more decision modules may be operable to use traditional AI capabilities, generative AI capabilities, or a combination of both traditional AI capabilities and generative AI capabilities. In some examples, the one or more decision modules may be operable to utilize machine learning algorithms to identify patterns and make dynamic decisions.

The one or more output interfaces may comprise a network API output. The network API output may be operable to be triggered by one of the one or more decision modules to communicate with other network servers or network entities. The one or more output interfaces may comprise a HTTP/2 proxy output. The HTTP/2 proxy output may be operable to rewrite HTTP/2 messages. The HTTP/2 proxy output may be operable to serve as a contact point between the session optimiser and the 5G core network functions, in order to inject data into the 5G core network functions.

In examples, the HTTP/2 proxy input may be operable to sniff each of the HTTP/2 messages received at the session optimiser. The HTTP/2 proxy input may initially examine at just the header of each HTTP/2 message, whereupon the decision modules may determine, on the basis of the header, whether the HTTP/2 proxy input should also examine the content of the message. In examples, the SEPP in the IPX domain decrypts HTTP/2 messages exchanged between SEPPs in the H-PLMN and V-PLMN. The optimiser can then sniff these messages using the HTTP/2 proxy input, and then manipulate or rewrite them if there is a criterion requesting said manipulation or rewriting. In examples, where a H-PLMN requests a V-PLMN to forward a PDU to a first UPF, UPF-A, but the session optimiser has a criterion to force that the PDU is forwarded to a second UPF, UPF-B, the session optimiser may use the HTTP/2 proxy output to rewrite the HTTP/2 message accordingly. In examples, where the V-PLMN requires a PDU for a DNN 'A' to a subscriber, but the session optimiser has a criterion to rewrite said DNN to 'C', the session optimiser may use the HTTP/2 proxy output to rewrite the HTTP/2 message accordingly.

In some examples, the session optimiser may comprise policies that are based on subscriber activity. The policies based on subscriber activity may comprise conditions related to subscriber behaviour and actions taken when the conditions related to subscriber behaviour are met. In some examples, a tariff may be offered to a user based on a roaming V-PLMN and an amount of consumed data of a certain type. For example, if a subscriber in the last 7 days was roaming in a V-PLMN A and 90% of consumed data was of a video type, then a tariff A may be offered. In some examples, a UPF may be allocated based on a current traffic type associated with a subscriber. For example, if a subscriber is currently performing IOT, then the subscriber may be allocated to UPF B. In some examples, an available speed for a subscriber may be restricted based on an amount of data consumed. For example, if a subscriber has consumed 10 GB of data in the last 10 days, then the subscriber may be throttled to a speed of 10 Mbps. In some examples, a suspected incorrect data network name associated with a range of subscribers may be corrected. For example, if a range of subscribers associated with H-PLMN A is accessing DNN *iMternet.com,* then the DNN may be rewritten to *internet.com.*

In examples, the session optimiser may be operable to offer user-oriented tariffs tailored to subscribers. In examples, the session optimiser may be operable to allocate UPFs and SMFs to subscriber sessions based on traffic patterns. In examples, the session optimiser may apply quality of service (QoS) profiles to subscribers based on traffic patterns. In examples, the session optimiser may act as a HTTP/2 proxy, with the capability to rewrite HTTP/2 messages. In examples, the session optimiser may provide a platform to manage bill shock, wherein the bill shock represents an unexpected increase in a subscriber's monthly bill that is not caused by a change in plan or tariff. In examples, the session optimiser may be operable to perform data throttling. In examples, the session optimiser may be operable to enable DNN rewriting. In examples, the session optimiser may be operable to provide means for blocking access to specified URLs.

In examples, the session optimiser may be operable to implement corrective actions in response to the detection of network anomalies. The corrective actions may be carried out in real-time. In the network database, a status of one or more network elements may be listed. In some examples, where the status of a network element is listed as offline, the session optimiser should not forward PDUs to said network element, which may be considered as a network anomaly. In some examples, if a latency for a network element is higher than a predefined threshold, the network element may be no longer available or suitable for receiving latency-sensitive PDUs, and thus may be considered as a network anomaly. In some examples, information regarding network anomalies may be received from other platforms via a network API, by receiving a network node status. In some examples, information regarding network anomalies may be determined by the session optimiser by executing keepalive messages against the network nodes. Corrective actions may comprise not sending PDUs to network nodes with an identified network anomaly. Corrective actions may comprise redirecting current sessions from a network node with an identified network anomaly to another network node without an identified network anomaly. By way of example, a PDU with a high latency sensitivity (e.g. <0.02s) may be allocated to UPF-A with a latency of 0.01s. If the session optimiser detects that the latency of UPF-A has increased to 0.05s, then the PDU should be reassigned to a UPF with a latency <0.02s, if available. By way of further example, if a UPF supporting 1000 subscribers is in active mode, but becomes offline at a certain time, then the session optimiser may reassign all sessions to an available UPF, if one is available. One subscriber may have several PDUs, where each PDU represents a subscriber session.

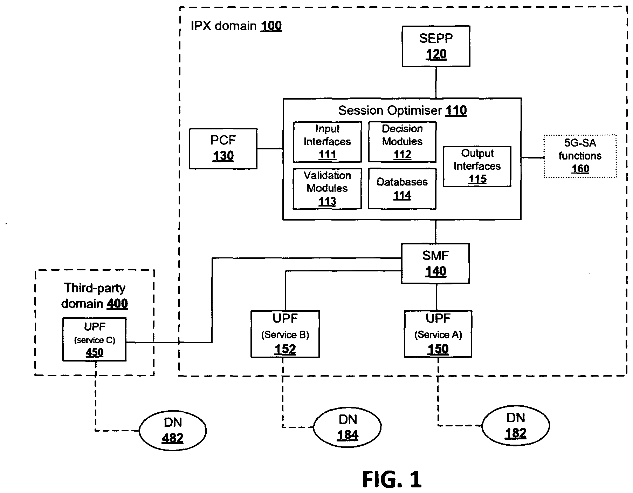

Figure 1 shows a block diagram of a session optimiser, 110, and associated functions in an IP exchange (IPX) domain, 100, in accordance with aspects of the present disclosure. The IPX domain 100 comprises a session optimiser 110, a Security Edge Protection Proxy (SEPP) 120, Policy Control Function (PCF) 130, Session Management Function (SMF) 140, and two User Plane Functions (UPF), including a first UPF 150 for a first service (service A) and a second UPF 152 for a second service (service B). The IPX domain 100 may further comprise one or more 5G standalone (5G-SA) functions 160.

The session optimiser 110 is communicatively connected to each of the SEPP 120, the PCF 130, and the SMF 140. The SMF 140 is communicatively coupled to the first UPF 150 and the second UPF 152. The UPF 150 is communicatively connected to a data network (DN) 182 located outside of the IPX domain 100, and the UPF 152 is communicatively connected to a DN 184 located outside of the IPX domain 100.

In some examples, a third-party domain 400 may comprise a UPF 450 for a third service (service C). The SMF 140 of the IPX domain 100 may be communicatively connected to the UPF 450 of the third-party domain 400. The UPF 450 is communicatively connected to a DN 482 located outside of the third-party domain 400.

It should be understood that although Figure 1 shows two UPFs (UPF 150 and UPF 152) in the IPX domain 100, some embodiments may have one UPF, or more than two UPFs. Similarly, although Figure 1 shows a single SMF (SMF 140) in the IPX domain 100, some embodiments may have more than one SMF.

The session optimiser 110 comprises one or more input interface modules 111, one or more decision modules 112, one or more data validation modules 113, one or more database modules 114, and one or more output interface modules 115.

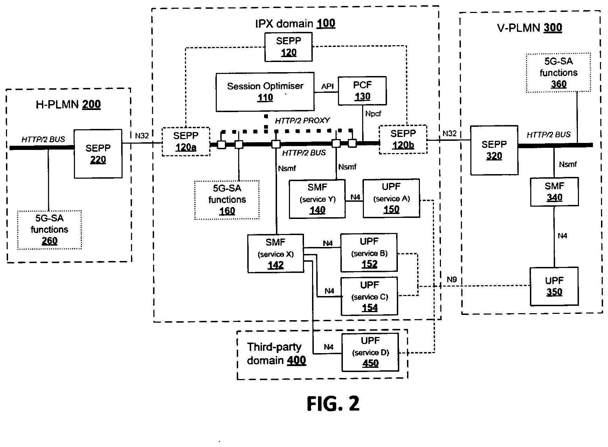

Figure 2 shows a block diagram of communications between an IPX domain 100, a H-PLMN 200, a V-PLMN 300, and a third-party domain 400, in accordance with aspects of the present disclosure. The IPX domain 100 comprises a session optimiser 110, a Security Edge Protection Proxy (SEPP) 120, a Policy Control Function (PCF) 130, a plurality of Session Management Functions (SMF) 140, 142, and a plurality of User Plane Functions (UPF) 150, 152, 154. The IPX domain 100 may further comprise one or more 5G standalone (5G-SA) functions 160. The SEPP 120 comprises a first SEPP 120a and a second SEPP 120b. The plurality of SMFs comprises a first SMF 140 for a first service (service Y), and a second SMF 142 for a second service (service X). The plurality of UPFs comprises a first UPF 150for a third service (service A), a second UPF 152for a fourth service (service B), and a third UPF 154for a fifth service (service C). It should be understood that although Figure 2 shows three UPFs (UPF 150, UPF 152, and UPF 154) in the IPX domain 100, some embodiments may have less than three UPFs, or more than three UPFs. Similarly, although Figure 2 shows a two single SMFs (SMF 140, SMF 142) in the IPX domain 100, some embodiments may have less than two SMFs, or more than two SMFs. The session optimiser 110 comprises modules as described with respect to Figure 1.

The session optimiser 110 is communicatively connected to a HTTP/2 bus via a HTTP/2 proxy. The session optimiser 110 is communicatively connected to PCF 130 via an application programming interface (API). The SEPP 120 may be communicatively coupled to the HTTP/2 bus. The PCF 130 may be communicatively connected to the HTTP/2 bus via a Npcf interface. Each of SMF 140 and SMF 142 may be communicatively connected to the HTTP/2 bus via respective Nsmf interfaces. The one or more 5G-SA functions may be communicatively connected to the HTTP/2 bus. The SMF 140 may be communicatively connected to the UPF 150 via a N4 interface. The SMF 142 may be communicatively connected to each of UPF 152 and UPF 154 via respective N4 interfaces.

The H-PLMN 200 comprises a SEPP 220 and one or more 5G-SA functions 260. Each of the SEPP 220 and the one or more 5G-SA functions 260 are communicatively connected to a HTTP/2 bus. The SEPP 220 of the H-PLMN 200 is communicatively connected to the SEPP 120a of the IPX domain 100 via a N32 interface.

The V-PLMN 300 comprises a SEPP 320, a SMF 340, a UPF 350, and one or more 5G-SA functions 360. The SEPP 320 is communicatively connected to a HTTP/2 bus. The SMF 340 is communicatively connected to the HTTP/2 bus via a Nsmf interface. The SMF 340 is communicatively connected to the UPF 350 via a N4 interface. The one or more 5G-SA functions 360 are communicatively connected to the HTTP/2 bus. The SEPP N320 of the V-PLMN is communicatively connected to the SEPP 120b of the IPX domain 100 via a N32 interface. The UPF 350 is communicatively connected to each of UPF 150, UPF 152, and UPF 154via a N9 interface.

A third-party domain 400 may comprise a UPF 450 for a service (service D). The UPF 450 may be communicatively connected to SMF 142 of the IPX domain 100 via a N4 interface. The UPF 450 may be communicatively connected to UPF 350 via a N9 interface. It should be understood that although Figure 2 shows a single UPF (UPF 450) in the third-party domain 400, some embodiments may have more than one UPF.

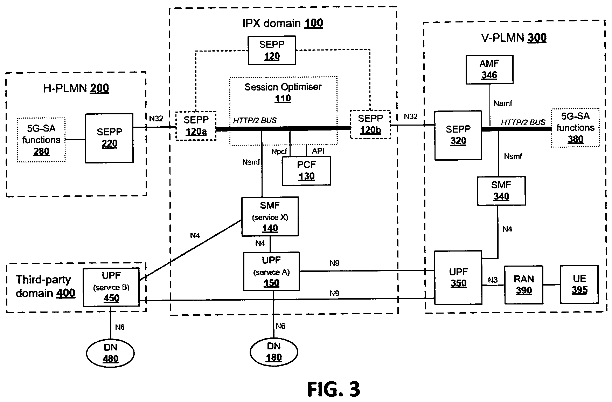

Figure 3 shows a block diagram of communications between an IPX domain 100, a H-PLMMN 200, a V-PLMN 300, and a third-party domain 400, in accordance with aspects of the present disclosure. The IPX domain 100 comprises a session optimiser 110, a Security Edge Protection Proxy (SEPP) 120, a Policy Control Function (PCF) 130, a Session Management Function (SMF) 140, and a User Plane Function (UPF) 150. The SEPP 120 comprises a first SEPP 120a and a second SEPP 120b. The SMF 140 may be associated with a first service (service X). The UPF 150 may be associated with a second service (service A). It should be understood that although Figure 3 shows a single UPF (UPF 150) in the IPX domain 100, some embodiments may have more than one UPF. It should be understood that although Figure 3 shows a single SMF (SMF 140) in the IPX domain 100, some embodiments may have more than one SMF. The session optimiser 110 comprises modules as described with respect to Figure 1.

The session optimiser 110 and SEPP 120b are communicatively connected to a HTTP/2 bus. The session optimiser 110 is operable to sniff HTTP/2 traffic exchanged on the HTTP/2 bus. The session optimiser 110 is communicatively connected to PCF 130 via an application programming interface (API). The SMF 140 is communicatively connected to the HTTP/2 bus via a Nsmf interface. PCF 130 iscommunicatively connected to HTTP/2 bus via a Npcf interface. SMF 140 is communicatively connected to UPF 150 via a N4 interface. The UPF 150 is connected to a data network (DN) 180 located outside of the IPX domain 100 via a N6 interface.

The H-PLMN 200 comprises a SEPP 220 and one or more 5G-SA functions 280. The SEPP 220 is communicatively connected to the one or more 5G-SA functions 280. The SEPP 220 of the H-PLMN 200 is communicatively connected to the SEPP 120a of the IPX domain 100 via a N32 interface.

The V-PLMN 300 comprises a SEPP 320, a SMF 340, an AMF 346, a UPF 350, a radio access network (RAN) 390, a user equipment (UE) 395, and one or more 5G-SA functions 380. The SEPP 320 is communicatively connected to a HTTP/2 bus. The SMF 340 is communicatively connected to the HTTP/2 bus via a Nsmf interface. The AMF 346 is communicatively connected to the HTTP/2 bus via a Namf interface. The SMF 340 is communicatively connected to the UPF 350 via a N4 interface. The UPF 350 is communicatively connected to the RAN 390 via a N3 interface. The RAN 390 is communicatively connected to the UE 395. The one or more 5G-SA functions 380 are communicatively connected to the SEPP 320. The SEPP 320 of the V-PLMN is communicatively connected to the SEPP 120b of the IPX domain 100 via a N32 interface. The UPF 350 of the V-PLMN 300 is communicatively connected to the UPF 150 of the IPX domain 100 via a N9 interface.

The third-party domain 400 comprises a UPF 450. The UPF 450 is communicatively connected to the SMF 140 of the IPX domain 100 via an N4 interface. The UPF 450 is communicatively connected to the UPF 350 of the V-PLMN 300 via a N9 interface. The UPF 450 is communicatively connected to a data network (DN) located outside of the third-party domain 400 via a N6 interface. It should be understood that although Figure 3 shows a single UPF (UPF 450) in the third-party domain 400, some embodiments may have more than one UPF.

As an example of operation with respect to the arrangement of Figure 3, consider a use case where a subscriber is roaming in the V-PLMN 300. The subscriber may trigger a *PDU Session establishment request.* The *PDU Session establishment request* may operate substantially as described in 3GPP TS 23.502, §4.3.2.2.2. An AMF of the V-PLMN 300 may perform an *SMF selection procedure.* The *SMF selection procedure* may operate substantially as described in 3GPP TS 23.502, §4.3.2.2.3.3. In response to the AMF performing the *SMF selection procedure,* the session optimiser 110 may be operable to detect the SMF selection procedure and rewrite the HTTP/2 message exchanged between the H-PLMN 200 and the V-PLMN 300 to cause the V-PLMN to send the *Nsmf_PDUSession_Create* request to the SMF 140 located in the IPX domain 100. The SMF 140 in the IPX domain 100 is then operable to perform a PCF selection procedure, with PCF information configured locally on the SMF 140. The PCF selection procedure operate substantially as described in 3GPP TS 23.501, §6.3.7.1. In examples, the SMF 140 may perform an *SM Policy Association Establishment* procedure to establish an *SM Policy Association* with the PCF and obtain the default PCC Rules for the PDU Session. The *SM Policy Association Establishment* procedure may operate substantially as described in 3GPP TS 23.502, §4.16.4. In an example operation, the session optimiser 110 may configure two PCC rules on the PCF 130 for a subscriber. A first PCC rule may comprise sending, by default, all sessions roaming on the V-PLMN 300 to UPF 150. A second PCC rule may comprise reporting when a subscriber starts performing video streaming. Reporting when a subscriber starts performing video streaming may operate substantially as described in 3GPP TS 23.503, §6.2.2. The SMF 140 may therefore allocate UPF 150 to the subscriber session. Accordingly, the subscriber user plane will be carried by UPF 150. If, for example, after a few minutes the subscriber begins performing video streaming, the SMF 140 will detect the video streaming traffic flow and notify the PCF 130. Detecting the video streaming traffic flow may be carried out substantially as described in 3GPP TS 23.502, §4.16.5.1. The session optimiser 110 may sniff all HTTP/2 data exchanged on a HTTP/2 bus in the IPX domain 100, and detect the message exchanged between the PCF 130 and the SMF 140. In examples, the session optimiser 110 may have a policy identifying that,for the subscriber, when roaming in V-PLMN 300 the video flow should be redirected to UPF 450 in the third-party domain 400. A new PDU should therefore be created for the video streaming, and UPF 450 should be used for this traffic flow. Accordingly, the session optimiser 110 will configure a policy on the PCF 130 with this instruction. The PCF 130 will notify this to the SMF 140. Notifying the SMF 140 may be performed substantially as described in 3GPP TS 23.502, §4.16.5.2. The SMF 140 will therefore redirect the video traffic to UPF 450. Redirecting the video traffic may be carried out substantially as described in 3GPP TS 23.502, §4.3.3. The subscriber will therefore be served by two UPFs: UPF 450 for video traffic, and UPF 150 for all remaining traffic. In some examples, the session optimiser 110 may additionally or alternatively offer a tailored data plan that better fits the subscriber's data consumption. The flows and data generated by the subscriber may be stored in a subscriber activity database at the session optimiser 110, enhancing subscriber visibility and enabling the offering of user-oriented tariffs. In some examples, this may comprise storing previously offered tariffs and those that were successfully offered. It should be appreciated that the above example operation is provided by way of example only, and many variations on this use case can be achieved using the session optimiser 110.

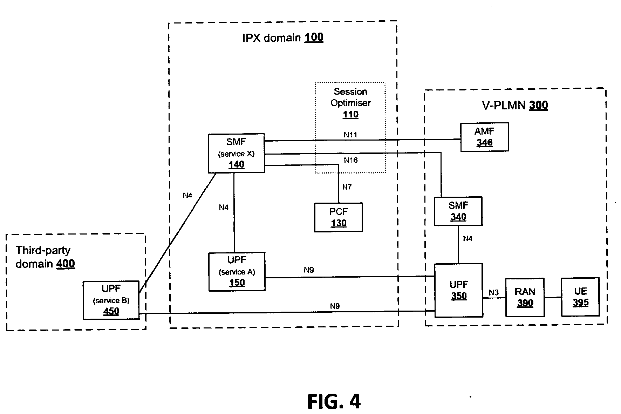

Figure 4 shows a block diagram of communications between an IPX domain 100, a V-PLMN 300, and a third-party domain 400, in accordance with aspects of the present disclosure. Figure 4 represents the same use-case as that of Figure 3, but describes the connections between entities using the reference point interfaces, as opposed to service-based interfaces as in Figure 3.

The IPX domain 100 comprises a session optimiser 110, a Policy Control Function (PCF) 130, a Session Management Function (SMF) 140, and a User Plane Function (UPF) 150. The SMF 140 may be associated with a first service (service X). The UPF 150 may be associated with a second service (service A). It should be understood that although Figure 4 shows a single UPF (UPF 150) in the IPX domain 100, some embodiments may have more than one UPF. It should be understood that although Figure 4 shows a single SMF (SMF 140) in the IPX domain 100, some embodiments may have more than one SMF. The session optimiser 110 comprises modules as described with respect to Figure 1.

The SMF 140 is communicatively connected to the PCF 130 via a N7 interface. The SMF 140 is communicatively connected to UPF 150 via a N4 interface. The SMF 140 is communicatively connected to the UPF 450 of the third-party domain 400 via a N4 interface. The SMF 140 is communicatively connected to the AMF 346 of the V-PLMN 300 via a N11 interface. The SMF 140 of the IPX domain 100 is communicatively connected to the SMF 340 of the V-PLMN 300 via a N16 interface. The session optimiser 110 is operable to sniff traffic over the N11, N16 and N7 interfaces. The UPF 150 of the IPX domain 100 is communicatively connected to the UPF 350 of the V-PLMN 300 via a N9 interface. The UPF 450 of the third-party domain 400 is communicatively connected to the UPF 350 of the V-PLMN 300 via a N9 interface. The SMF 340 is communicatively connected to the UPF 350 via a N4 interface. The UPF 350 is communicatively connected to the RAN 390 via a N3 interface. The RAN 390 is communicatively connected to the UE 395.

Examples and embodiments of the present disclosure provide a method for a session optimiser in an IP exchange (IPX) domain, the method comprising: receiving, at the session optimiser, information relating to signalling and subscriber user plane payloads for a roaming subscriber; storing, at the session optimiser, the received information relating to signalling and subscriber user plane payloads; determining, at the session optimiser, a subscriber profile for the subscriber based on the stored information relating to signalling and subscriber user plane payloads; and performing, by the session optimiser, one or more actions based on the determined subscriber profile.

In some examples or embodiments the stored information relating to signalling and user plane payloads comprises one or more sets of historic information relating to signalling and subscriber user plane payloads and one or more sets of live information relating to signalling and subscriber user plane payloads.

In some examples or embodiments the one or more actions comprises allocating one or more Session Management Functions or one or more User Plane Functions to subscriber traffic.

In some examples or embodiments the subscriber profile comprises information relating to subscriber activity.

In some examples, the subscriber activity comprises one or more of a V-PLMN identity and a H-PLMN identity.

In some examples, the subscriber activity comprises a Subscription Permanent Identifier (SUPI).

In some examples or embodiments the one or more actions comprises: determining, at the session optimiser, a quality of service profile for the subscriber based on the subscriber profile, wherein the subscriber profile comprises one or more types of traffic; allocating, by the session optimiser, one or more Session Management Functions or one or more User Plane Functions based on the determined quality of service profile; and performing, by the session optimiser, an implementation of quality of service to the subscriber traffic.

In some examples or embodiments the one or more actions comprises determining a subscriber tariff for the subscriber

In some examples or embodiments the one or more actions comprises determining a policy related to performing Deep Packet Inspection (DPI).

In some examples or embodiments the one or more actions comprises implementing a corrective action in response to detection of a network anomaly.

Some examples or embodiments further comprise receiving, at the session optimiser, one or more of: one or more subscriber policies associated with one or more subscribers or groups of subscribers, one or more price plans, one or more triggers to activate one of the one or more price plans, information relating to subscriber activity, and information related to one or more 5G core elements of the network.

In some examples or embodiments the information relating to subscriber activity comprises one or more parameters exchanged via a HTTP/2 bus to which the session optimiser is connected.

In some examples or embodiments the information relating to subscriber activity comprises one or more of a Subscription Permanent Identifier (SUPI), a session date, a session time, session duration, a Visited Public Land Mobile Network (V-PLMN), a Home Public Land Mobile Network (H-PLMN), a Data Network Name (DNN), an amount of consumed data, and a type of traffic, or similar.

Some examples or embodiments further comprise validating, by the session optimiser, one or more of the one or more subscriber policies, the one or more price plans, the information relating to subscriber activity, and the information relating to one or more 5G core elements.

In some examples or embodiments the information related to one or more 5G core elements of the network comprises one or more of a Session Management Function (SMF) location, a User Plane Function (UPF) location, a latency associated with a SMF, a latency associated with a UPF, a type of traffic for which a SMF is able to serve, a type of traffic for which a UPF is able to serve, a node reachability status, a node ID, and a list of allowed locations.

In some examples, the list of allowed locations comprises one or more H-PLMNs or V-PLMNs that a node is able to serve.

Some examples or embodiments further comprise validating, by the session optimiser, the information relating to signalling and subscriber user plane payloads.

In some examples or embodiments the one or more actions are operable to be carried out by one or more of a network API output of the session optimiser, or a HTTP/2 proxy output of the session optimiser.

In some examples, the HTTP/2 proxy output is operable to rewrite messages exchanged between a H-PLMN and a V-PLMN, and/or messages exchanged between one or more functions located in the IPX domain.

In some examples or embodiments the receiving information is operable to be carried out by one or more of a network API input of the session optimiser, a HTTP/2 proxy input of the session optimiser, or a user interface.

In some examples, the HTTP/2 proxy input is operable to sniff messages exchanged between a H-PLMN and a V-PLMN and/or messages exchanged between one or more functions located in the IPX domain.

Further examples and embodiments of the present disclosure provide a system for an IP exchange (IPX) domain, comprising: a Security Edge Protection Policy (SEPP); a Policy Control Function (PCF); a Session Management Function (SMF); a User Plane Function (UPF); and a session optimiser, wherein the session optimiser is operable to carry out the method of any of the various examples and embodiments described herein.

Some examples or embodiments further comprise a HTTP/2 bus, and the session optimiser the SEPP, the SMF, and the PCF are communicatively coupled to the HTTP/2 bus.

In some examples one or more of the SEPP, the SMF and the PCF are in the IPX domain.

In some examples each of the SEPP, PCF, SMF, UPF and session optimiser are in the IPX domain.

In some examples, the UPF is outside of the IPX domain.

In some examples or embodiments wherein the UPF comprises a Deep Packet Inspection (DPI) feature.

All of the features disclosed in this specification (including any accompanying claims, abstract, and drawings) may be combined in any combination, except combinations where some features are mutually exclusive. Each feature disclosed in this specification, including any accompanying claims, abstract, and drawings, may be replaced by alternative features serving the same, equivalent, or similar purpose, unless expressly stated otherwise. Thus, unless expressly stated otherwise, each feature disclosed in one example of a generic series of equivalent or similar features.

The present teachings are not restricted to the details of any of the foregoing examples. Any novel combination of the features disclosed in this specification (including any accompanying claims, abstract, and drawings) may be envisaged. The claims should not be construed to cover merely the foregoing examples, but also any variants which fall within the scope of the claims.

## Claims

1. A method for a session optimiser in an IP exchange (IPX) domain, the method comprising:
receiving, at the session optimiser, information relating to signalling and subscriber user plane payloads for a roaming subscriber.
storing, at the session optimiser, the received information relating to signalling and subscriber user plane payloads;
determining, at the session optimiser, a subscriber profile for the subscriber based on the stored information relating to signalling and subscriber user plane payloads; and
performing, by the session optimiser, one or more actions based on the determined subscriber profile.

2. The method of claim 1, wherein the stored information relating to signalling and user plane payloads comprises one or more sets of historic information relating to signalling and subscriber user plane payloads and one or more sets of live information relating to signalling and subscriber user plane payloads.

3. The method of claim 1 or 2, wherein the one or more actions comprises allocating one or more Session Management Functions and/or one or more User Plane Functions to subscriber traffic; and/or
wherein the subscriber profile comprises information relating to subscriber activity.

4. The method of any of claims 1 to 3, wherein the one or more actions comprises:
determining, at the session optimiser, a quality of service profile for the subscriber based on the subscriber profile, wherein the subscriber profile comprises one or more types of traffic;
allocating, by the session optimiser, one or more Session Management Functions or one or more User Plane Functions based on the determined quality of service profile; and
performing, by the session optimiser, an implementation of quality of service to the subscriber traffic.

5. The method of any of claims 1 to 4, wherein the one or more actions comprises determining a subscriber tariff for the subscriber; and/or
wherein the one or more actions comprises determining a policy related to performing Deep Packet Inspection (DPI); and/or
wherein the one or more actions comprises implementing a corrective action in response to detection of a network anomaly.

6. The method of any of claims 1 to 5, further comprising receiving, at the session optimiser, one or more of: one or more subscriber policies associated with one or more subscribers or groups of subscribers, one or more price plans, one or more triggers to activate one of the one or more price plans, information relating to subscriber activity, and information related to one or more 5G core elements of the network.

7. The method of claim 6, wherein the information relating to subscriber activity comprises one or more of a Subscription Permanent Identifier (SUPI), a session date, a session time, a session duration, a Visited Public Land Mobile Network (V-PLMN), a Home Public Land Mobile Network (H-PLMN), a Data Network Name (DNN), an amount of consumed data, and a type of traffic.

8. The method of claim 6 or 7, further comprising validating, by the session optimiser, one or more of the one or more subscriber policies, the one or more price plans, the information relating to subscriber activity, and the information relating to one or more 5G core elements.

9. The method of any of claims 6 to 8, wherein the information related to one or more 5G core elements of the network comprises one or more of a Session Management Function (SMF) location, a User Plane Function (UPF) location, a latency associated with a SMF, a latency associated with a UPF, a type of traffic for which a SMF is able to serve, a type of traffic for which a UPF is able to serve, a node reachability status, a node ID, and a list of allowed locations.

10. The method of any of claims 1 to 9, further comprising validating, by the session optimiser, the information relating to signalling and subscriber user plane payloads.

11. The method of any of claims 1 to 10, wherein the one or more actions are operable to be carried out by one or more of a network API output of the session optimiser, or a HTTP/2 proxy output of the session optimiser and optionally wherein the HTTP/2 proxy output is operable to rewrite messages exchanged between a H-PLMN and a V-PLMN and/or messages exchanged between one or more functions located in the IPX domain.

12. The method of any of claims 1 to 11, wherein the receiving information is operable to be carried out by one or more of a network API input of the session optimiser, a HTTP/2 proxy input of the session optimiser, or a user interface, and optionally wherein the HTTP/2 proxy input is operable to sniff messages exchanged between a H-PLMN and a V-PLMN and/or messages exchanged between one or more functions located in the IPX domain.

13. A system for an IP exchange (IPX) domain, comprising:
a Security Edge Protection Policy (SEPP);
a Policy Control Function (PCF);
a Session Management Function (SMF);
a User Plane Function (UPF); and
a session optimiser,
wherein the session optimiser is operable to carry out the method of any of claims 1 to 12.

14. The system of claim 13, further comprising a HTTP/2 bus, and wherein the session optimiser, the SEPP, the SMF, and the PCF are communicatively coupled to the HTTP/2 bus.

15. The system of claim 13 or 14, wherein the UPF comprises a Deep Packet Inspection (DPI) feature.
